# EUROPEAN PATENT APPLICATION

(11) **EP 1 529 666 A2**
(43) Date of publication of application: **11.05.2005**
(21) Application number: 04025046.6
(22) Date of filing: 21.10.2004
(51) Int. Cl.: B60C 25/132

(54) **Tire changing machine implenent for fitting and removing tires of vehicle wheels**

(30) Priority: 04.11.2003 IT MO20030299
(71) Applicant: SICAM S.r.l., 42015 Correggio (Reggio Emilia) (IT)
(72) Inventor: Bartoli, Pietro, 42015 Correggio (Reggio Emilia) (IT); Boni, Dido, 42100 Reggio Emilia (IT)
(74) Representative: Modiano, Guido, Dr.-Ing.

(57) **Abstract**

A tire changing machine implement for fitting and removing tires of vehicle wheels, comprising at least one element (2) that is engaged so that it can slide along a rectilinear guiding member (3) and can be inserted between a tire (P) and a vehicle wheel rim (C) that is supported so that it can rotate about at least one rotation axis (A₁, A₂) on a tire changing machine, the rectilinear guiding member (3) being associable with the tire changing machine substantially at right angles to the axis of rotation (A₁, A₂) and rotatable about an oscillation axis (9a, 9b) that is substantially parallel to the rotation axis (A₁, A₂).

## Description

The present invention relates to a tire changing machine implement for fitting and removing tires of vehicle wheels.

It is known to use tire changing machines in car repair shops in order to fit and remove a tire on or from a rim of a wheel for vehicles, such as cars, trucks and the like.

These machines are commonly provided with a frame for supporting wheel rim grip means, which by way of conventional actuators, generally of the pneumatic type, can be turned about one or more rotation axes.

Moreover, the frame supports at least one generally curved tool, which can move toward and away from the rim rotation axis and can be wedged between the beads of the tire and the annular raised edges of the rim.

The relative motion between the tool and the tire is actuated by way of conventional actuation means, which are powerful enough to allow deformation of the tire of the wheel, allowing to push the beads inward or outward with respect to the annular edges of the rims.

The rotation of the wheel by way of the grip means allows to insert or extract the tire along the entire circumference formed by the annular edge of the rim.

However, because of the nature of tires, the bead correctly positioned in one point of the rim tends spontaneously to escape, or retract, at another point of the circumference.

Accordingly, when using conventional tire changing machines it is necessary to resort to auxiliary implements, which keep in position the bead until a limit point is reached in which the annular edge of the rim is completely surmounted.

Commonly, these auxiliary implements are constituted by one or more levers provided to the operator who manages the operation of the tire changing machine; such lever must be inserted manually between the bead and the rim and then kept in this position by the operator during the rotation of the wheel until the bead has completely surmounted the annular edge.

As an alternative to manually-actuated levers, especially for tire changing machines that work on large tires which as such are considerably rigid, the auxiliary implements are constituted by particular rollers, which by way of appropriately provided motor devices can be arranged in rolling contact on tire at the inner and outer sidewalls, where the expression "outer sidewall" designates the sidewall that remains visible when the rim is fitted to the vehicle and the expression "inner sidewall" designates the opposite sidewall.

Such movable rollers are commonly suitable to push the sidewalls of tires in cooperation with the tool in order to prevent their unwanted escape or retraction with respect to the annular edges.

These known types of auxiliary implement, however, are not free from drawbacks, such as the fact that the manual insertion of the levers between the bead and the rim is a particularly awkward, uncomfortable and tiring operation, especially if it is performed by a single operator who may endanger the integrity of the rims, with the risk of scratches and/or dents, and that the rollers require expensive and bulky motor devices.

The aim of the present invention is to eliminate the above-noted drawbacks of the background art, by providing a tire changing machine implement for fitting and removing tires of vehicle wheels that is particularly simple to use, without requiring specific efforts or skills on the part of the operator.

Within this aim, an object of the present invention is to be applicable to any type of tire changing machine, whether used for fitting/removing wheels having a large diameter or for wheels having small dimensions.

Another object of the present invention is to provide a tire changing machine implement that is simple, relatively easy to provide in practice, safe in use, effective in operation, and has a relatively low cost.

This aim and these and other objects that will become better apparent hereinafter are achieved by the present tire changing machine implement for fitting and removing tires of vehicle wheels, characterized in that it comprises at least one element that is engaged so that it can slide along rectilinear guiding means and can be inserted between a tire and a vehicle wheel rim that is supported so that it can rotate about at least one rotation axis on a tire changing machine, said rectilinear guiding means being associable with said tire changing machine substantially at right angles to said axis of rotation and rotating about an oscillation axis that is substantially parallel to said rotation axis.

Further characteristics and advantages of the present invention will become better apparent from the following detailed description of a preferred but not exclusive embodiment of a tire changing machine implement for fitting and removing tires of vehicle wheels, illustrated by way of non-limiting example in the accompanying drawings, wherein:
Figure 1 is a partial schematic perspective view of the implement according to the invention, applied to a wheel that is supported so that it can rotate about a vertical rotation axis;
Figure 2 is a partial schematic perspective view of the implement according to the invention, applied to a wheel that is supported so that it can rotate about a horizontal rotation axis;

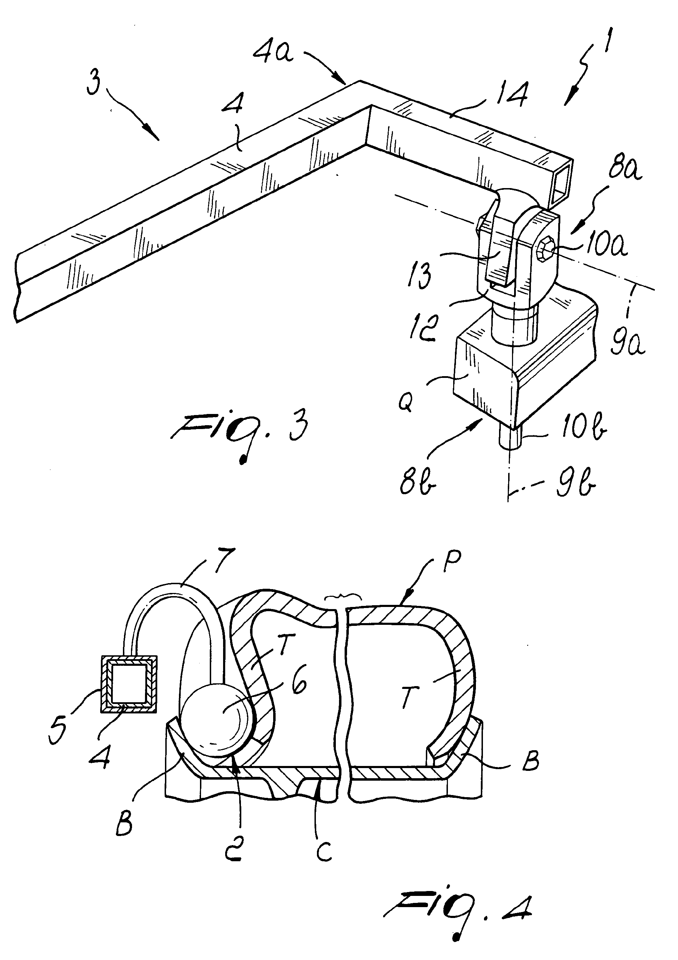

Figure 3 is an enlarged-scale perspective view of a detail of the implement according to the invention;
Figure 4 is a schematic partial sectional view of the implement of Figure 2.

With reference to the figures, the reference numeral 1 generally designates a tire changing machine implement for fitting and removing tires of vehicle wheels.

The implement 1 according to the invention comprises an element 2, which is engaged so that it can slide on rectilinear guiding means 3 and can be inserted between a tire P and a vehicle wheel rim C.

Said wheel is supported on conventional grip means M, which rotate about at least one rotation axis of a generic tire changing machine provided with a conventional tool U for fitting and removing the tire P on and from the rim C.

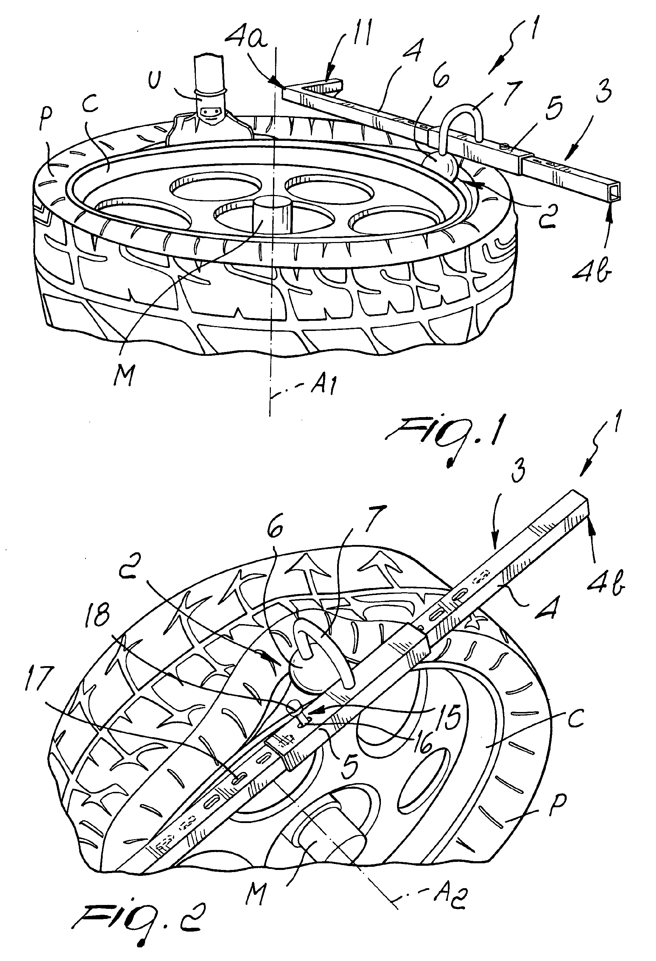

In particular, said tire changing machine may be of the type with a vertically-arranged rotation axis, designated by A₁ in Figure 1, or of the type with a horizontally-arranged rotation axis, designated by A₂ in Figure 2, or of the type provided with means for moving the grip means M by way of which it is possible to overturn the wheel and arrange it selectively so that it rotates horizontally or vertically.

The rectilinear guiding means 3 are associable with the tire changing machine, with respect to which, in particular, they can be arranged substantially at right angles to the rotation axis A₁, A₂ and so that they rotate about an oscillation axis that is substantially parallel to said rotation axis.

Advantageously, the rectilinear guiding means 3 comprise a bar 4 on which a slider 5 is engaged so that it can slide, said slider being formed by a tubular portion inside which said bar is inserted snugly.

In particular, the cross-sectional perimetric configuration of the surfaces in mutual contact of the tubular portion and of the bar 4 are polygonal and square, so as to provide a side-fit coupling and prevent any relative rotation of the slider 5 with respect to the bar 4.

The element 2 comprises a spherical body 6, which is protrudingly associated with the slider 5, for example by means of the interposition of a U-shaped rod 7, the ends of which are respectively rigidly connected to said spherical body and to a lateral surface of said slider; said spherical body is intended, during use, to be interposed between a bead T of the tire P and an annular edge B of the rim C.

The spherical body 6 is covered with non-chipping material, this term being used to designate any material known to have non-chipping properties, such as plastics, rubber or the like, that is adapted to be placed in contact with the annular edge B without damaging it.

Conveniently, the implement 1 comprises first means 8a for rotation about a first directrix 9a, which is perpendicular to the rectilinear guiding means 3, and second means 8b for rotating about a second directrix 9b, which is substantially perpendicular to the rectilinear guiding means 3 and to the first directrix 9a.

The first rotation means 8a, for example, comprise a first hinge pivot 10a, which lies along the first directrix 9a and is rotationally interposed between an end portion 11 of the rectilinear guiding means 3 and the two wings of a fork-like support 12.

The end portion 11, in particular, comprises a flat portion 13, which is provided with a transverse through opening for accommodating snugly a first pivot 10a, and a linear portion 14, which lies parallel to the first directrix 9a and whose ends are respectively rigidly associated with the flat portion 13 and with an end 4a of the bar 4.

The second rotation means 8b instead comprise for example a second hinge pivot 10b, which lies along the second directrix 9b and is rigidly associated with the portion that connects the two wings of the fork-like support 12 on the opposite side with respect to the first pivot 10a.

Accordingly, the implement 1 can be associated with at least one and any portion, such as Q of the tire changing machine that is provided with one or more holes in which it is possible to insert snugly the second pivot 10b.

In a preferred embodiment of the present invention, said holes are substantially vertical, so as to accordingly allow to support the implement 1 even merely by simple resting contact.

In this embodiment of the present invention, if the rim C of the wheel supported by the tire changing machine rotates about the vertical rotation axis A₁, or about the horizontal rotation axis A₂, the oscillation axis of the rectilinear guiding means 3 coincides with the second directrix 9b or with the first directrix 9a.

Advantageously, the end 4b of the bar 4 that lies opposite the end 4a is free and has no kind of hindrance, allowing to extract the slider 5 from said bar and to reinsert it so that the spherical body 6 faces a sidewall of the wheel.

Therefore, regardless of whether the wheel C rotates about the vertical rotation axis A₁ or the horizontal rotation axis A₂ and of whether the implement 1 is applied to the inner or outer sidewall of the wheel, the element 2 can be arranged in any case so that it is interposed between the tire P and the rim C.

The implement 1 may further comprise means for removably blocking the sliding of the element 2 on the rectilinear guiding means 3; said removable blocking means 15 may be formed for example by a first through slot 16 that is provided in the slider 5 and by a plurality of second through slots 17 provided on the bar 4 and distributed along it.

Moreover, the removable locking means may comprise a connecting pin 18 that can be inserted snugly in the first slot 16 and alternatively in one of the second slots 17 that is arranged so as to mate with said first slot 16.

The operation of the present invention is as follows: the implement 1 can be easily associated with the tire changing machine at the portions Q both before and after the application of the grip means M to the wheel.

At beginning of the fitting step, the element 2 is positioned by the operator between the tire P and the rim C, so as to keep the bead T inside the annular edge B.

Then, while the wheel is turned about the rotation axis A and the tool U pushes the bead T into the seat of the rim C, the element 2 remains forced between the tire P and the rim C and is turned with them; accordingly, the slider 5 slides on the bar 4, which in turn can rotate about the oscillation axis until fitting has occurred. During removal, instead, the spherical body 6 is inserted between the rim C and the tire P so that the bead T is arranged outside the annular edge B, and during the rotation of the wheel prevents said bead from again moving beyond said annular edge.

During both fitting and removal, the rotation of the rectilinear guiding means 3 about the oscillation axis occurs without direct intervention of the operator, who may simply manually guide the end 4b of the bar 4 without in any case imparting any force or thrust thereto.

In practice, it has been found that the described invention achieves the intended aim and objects, and in particular the fact is stressed that it allows to provide an auxiliary tire changing machine implement that is capable of facilitating tire fitting and removal operations by being very convenient and practical to use and allowing to simplify considerably the work of the operator.

Moreover, it is noted that the present invention is particularly simple to manufacture and far less expensive than known motorized moving rollers, since it requires no actuator for movement.

Finally, the present invention has the advantage of being applicable universally to any type of tire changing machine, regardless of the inclination of the rotation axis of the grip means and regardless of the dimensions of the tires that are fitted or removed.

In particular, it is noted that the solution of using first and second means for rotation about two mutually perpendicular directrices on the one hand allows the auxiliary implement to work even if the rectilinear guiding means are not perfectly perpendicular to the wheel rotation axis and on the other hand allows movements of the bar also toward and away from the wheel, which are useful during the insertion of the spherical body between the bead and the annular edge.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the protective scope of the appended claims.

The disclosures in Italian Patent Application No. MO2003A000299 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A tire changing machine implement for fitting and removing tires of vehicle wheels, **characterized in that** it comprises at least one element (2) that is engaged so that it can slide along rectilinear guiding means (3) and can be inserted between a tire (P) and a vehicle wheel rim (C) that is supported so that it can rotate about at least one rotation axis (A₁, A₂) on a tire changing machine, said rectilinear guiding means (3) being associable with said tire changing machine substantially at right angles to said axis (A₁, A₂) of rotation and rotating about an oscillation axis (9a, 9b) that is substantially parallel to said rotation axis (A₁, A₂).

2. The implement according to claim 1, **characterized in that** it comprises first means (8a) for rotation about a first directrix (9a), which is substantially perpendicular to said rectilinear guiding means (3).

3. The implement according to one or more of the preceding claims, **characterized in that** it comprises second means (8b) for rotation about a second directrix (9b), which is substantially perpendicular to said rectilinear guiding means (3) and to said first directrix (9a).

4. The implement according to one or more of the preceding claims, **characterized in that** said rectilinear guiding means (3) comprise a bar (4) on which a slider (5) is slidingly engaged.

5. The implement according to one or more of the preceding claims, **characterized in that** said slider (5) is formed by a tubular portion inside which said bar (4) is inserted snugly.

6. The implement according to one or more of the preceding claims, **characterized in that** the cross-sectional perimetral configurations of said tubular portion and of said bar (4) are polygonal.

7. The implement according to one or more of the preceding claims, **characterized in that** said slidable element (2) comprises a substantially spherical body (6) that is protrudingly associated with said slider (5).

8. The implement according to claim 7, **characterized in that** said spherical body (6) is covered with non-chipping material.

9. The implement according to claim 8, **characterized in that** said non-chipping material is selected in a group comprising plastics, rubber or other suitable, non-chipping materials.

10. The implement according to one or more of the claims 2-9, **characterized in that** said first rotation means comprise a first hinge pivot (10a), which lies along said first directrix (9a) and is rotationally interposed between an end portion of said rectilinear guiding means (3) and a fork-like support (12).

11. The implement according to one or more of the claims 3-10, **characterized in that** said second rotation means (8b) comprise a second hinge pivot (10b), which lies along said second directrix (9b) and is rigidly associated with said fork-like support (12) on the opposite side with respect to said first hinge pivot (10a).

12. The implement according to one or more of the preceding claims, **characterized in that** it is associable with at least one portion (Q) of said tire changing machine that is provided with at least one hole in which said second hinge pivot (10b) is insertable.

13. The implement according to claim 12, **characterized in that** the orientation of said at least one hole is substantially vertical.

14. The implement according to one or more of the claims 3-13, **characterized in that** said rotation axis (A₁) is substantially vertical, said oscillation axis coinciding with said second directrix (9b).

15. The implement according to one or more of the claims 2-13, **characterized in that** said rotation axis (A₂) is substantially horizontal, said oscillation axis coinciding with said first directrix (9a).

16. The implement according to one or more of the preceding claims, **characterized in that** said implement comprises means (15) for removably blocking the sliding of said element (2) on said rectilinear guiding means (3).

17. The implement according to claim 16, **characterized in that** said removable blocking means (15) comprise at least one first through slot (16) and one second through slot (17), which are formed respectively in said slider (5) and in said bar (4), and at least one connecting pin (18), which can be inserted snugly in said first and second slots (16, 17), said slots being adapted to be arranged so that they substantially mate and allow the insertion of said connecting pin (18).

18. The implement according to one of the claims 16 or 17, **characterized in that** said removable blocking means (15) comprise a plurality of said second slots (17) distributed along said bar (4).
